# EUROPEAN PATENT APPLICATION

(11) **EP 0 901 099 A2**
(43) Date of publication of application: **10.03.1999**
(21) Application number: 98116723.2
(22) Date of filing: 03.09.1998
(51) Int. Cl.: G06K 19/00

(54) **Portable terminal and method for the identification of articles**

(30) Priority: 03.09.1997 JP 238607/97; 07.01.1998 JP 1454/98; 04.02.1998 JP 23117/98
(71) Applicant: UNITIKA LTD., Amagasaki-shi Hyogo (JP)
(72) Inventor: Furukawa, Shinji, Kyoto-shi, Kyoto 612-8122 (JP); Yano, Nobuyoshi, Uji-shi, Kyoto 611-0014 (JP); Yoshinaga, Terumasa, Nagoya-shi, Aichi 464-0815 (JP)
(74) Representative: HOFFMANN - EITLE

(57) **Abstract**

A portable terminal having an integrated circuit, a data transceiver, and a magnetic element. The integrated circuit stores data and/or effects operations. The data transceiver transmits and receives data respectively to and from external terminals. The magnetic element, which is comprised of a soft magnetic material, undergoes abrupt magnetization reversal when applied with an external alternating magnetic field, and outputs an inherent signal as a security signal.

## Description

### Background of the Invention

### 1. Field of the Invention

The present invention relates to a portable terminal having security or identification capability. More particularly, the present invention relates to a portable terminal for remotely transmitting and receiving data respectively to and from external host terminals. The present invention also relates to a method for identifying terminals using abrupt magnetization reversal, as an inherent signal, output by a magnetic element when the element is under the influence of an externally applied alternating magnetic field. Incidentally, in the present invention, meaning of the portable terminal includes a wireless communication terminal, a non-contact IC card and the like.

### 2. Description of the Related Art

There are many known portable, small-sized terminals for dealing with money, membership, qualification, etc. An example of such a well known terminal is a magnetic card. In recent years, a new terminal, which has been replacing the magnetic card, is a so-called IC card having an integrated circuit such as microcomputer and memory incorporated therein. These IC cards have been used in various fields such as traffic, finance, medical treatment and utility. Among these IC cards, a portable terminal that allows remote transmission and reception of data with data processing terminals has been expected to be extremely convenient.

Such a wireless, portable terminal is an IC having an antenna used for transmission and reception of data signals with data processing terminals, thereby allowing for remote sensing. At present, such a non-contact is available in a close-contact type that communicates with data processing terminals at a distance of up to about 2 mm, a proximity type that communicates with data processing terminals at a distance of up to about 1 m, and microwave type that communicates with data processing terminals at a distance of several meters. Unlike a contact IC card, such a portable terminal requires no electrode and is thus highly reliable. Further, such a portable terminal is advantageous in that since it has no driving portions such as a conveying mechanism, its reader and writer are maintenance-free. The antenna element to be incorporated in such a portable terminal is properly selected depending on the distance at which data communications can be effected with data processing terminals, the communications system, and the system for supplying electric power to portable terminals.

As portable terminals having a function similar to that of the portable terminals, there have been used wireless tags called ID tags or transponders, which are used to control entrances and exits of people, the management of livestock, the assortment of articles in production or sales, the management of lift tickets in skiing resorts, the management of sports clubs, etc.

The portable terminals, such as the above-described portable terminals and wireless tags, are provided with a microcomputer for effecting high-degree operations and a memory having a large capacity if complicated important data such as money data are dealt with. However, if only a simple function such as an assortment of articles is required, these portable terminals are provided with a memory having a small capacity and a simplified structure so that they can be made available to consumers at a lower cost.

As these systems become more and more widely available, it is more important to ensure security for the prevention of illegal use. The security for contact and portable terminals has been accomplished by signal encoding. For some tags or transponders used for identification control, similar signal encoding techniques have been employed. However, this approach is seriously disadvantageous in that once the content of the encoding program is revealed, there is no means for preventing illegal use. Further, even if the system manager has developed a new program, the illegal user can decode the content of the new program, and the system manager must modify the program again. Thus, the system manager and the illegal user repeatedly conduct offensive and defensive battles over the decoding of the program, thereby adding to the cost of system security.

In view if the above, security using a hardware mechanism that cannot be modified by illegal users has been needed.

### Summary of the Invention

An object of the present invention is to provide an inexpensive portable terminal having a security feature that protects against forgery and alteration. This object is accomplished by incorporating an element that generates an inherent signal in a portable terminal. The portable terminal is devised to have a special structure such that the foregoing element can operate without impairing the terminal's properties, particularly during production or use of the portable terminal. Another object of the present invention is to provide a detection method that uses the foregoing portable terminal to easily and surely detect forgery and alteration.

The present invention concerns a portable terminal having an integrated circuit, a data transceiver, and a magnetic element. The integrated circuit stores data and/or effects operations. The data transceiver transmits and receives data respectively to and from external host terminals. The magnetic element, which characterizes this invention, undergoes abrupt magnetization reversal when applied with an external alternating magnetic field, to thereby output an inherent signal as a security signal.

When an alternating magnetic field is externally applied to a portable terminal provided with a magnetic element as mentioned above, a soft magnetic material contained in the magnetic element shows an abrupt magnetization reversal at a predetermined magnitude to externally emit a magnetic field. Since the change in the magnetization of the special soft magnetic material is rapid, the magnetic field emitted by the soft magnetic material is pulse-like. By detecting the magnetic pulse as a signal, security can be provided. The present invention is advantageous in that magnetism can be used to provide inherent data, such as security data, at a far distance. Therefore, the present invention is particularly suitable in portable terminals.

The foregoing magnetic element may be one that shows a change in magnetic properties when subjected to a current, voltage, magnetic field or stress, or when cut. As the magnetic element, a metallic soft magnetic material may be used to form a part of an electrode of a capacitor. When the capacitor is energized with current or irradiated with an electric wave, the capacitor is subject to dielectric breakdown as the properties of the metallic soft magnetic material change.

Alternatively, a magnetic bias element containing a hard magnetic material having a coercive force greater than the foregoing soft magnetic material may be disposed close to the magnetic element. As a result, when the magnetic bias element is magnetized, a bias magnetic field is applied to the soft magnetic material causing a change in the magnetic properties of the material. This operation makes the output signal of the magnetic element variable.

The present invention also provides a method for providing a wireless communication terminal with security. The method first comprises the step of externally applying an alternating magnetic field to a wireless communication terminal having an integrated circuit, an antenna and a magnetic element incorporated therein. The applied alternating magnetic field causes the magnetic element to undergo an abrupt magnetization reversal and hence emit a magnetic pulse which is then detected and processed to provide security.

The present invention further provides a method for detecting even a small signal output from a magnetic element at a high sensitivity. This method comprises the step of detecting a magnetic pulse emitted by a magnetic element by the antenna provided in the portable terminal itself, while externally emitting a corresponding security signal from the foregoing antenna.

The present invention also provides a detection method that provides a further improvement in a user's convenience in reading a signal inherent to a magnetic element from the foregoing portable terminal having the magnetic element incorporated therein. The method of identifying an article first comprises the step of applying an alternating magnetic field to the article to be detected. The article has a plurality of elements disposed at arbitrary positions. When these elements are subjected to an externally applied periodic alternating magnetic field, they each undergo abrupt magnetization reversal at a respective magnetic intensity to generate an inherent signal. The magnetic intensity of magnetization reversal of each of the elements are detected according to the time during which these signals are generated and the exciting waveform of the alternating magnetic field. Then the elements are identified by the magnetic intensity of magnetization reversal so as to identify the article. The method is characterized in that a specific element having a known magnetic intensity of magnetization reversal is disposed on the article as a reference element, so that the intensity of the magnetic field applied to the article is calculated according to the time during which these signals are generated and the exciting waveform of the alternating magnetic field. The magnetic intensity of magnetization reversal of the other elements are detected according to the results of the specific element.

The entire disclosure of each and every foreign patent application from which the benefit of foreign priority has been claimed in the present application is incorporated herein by reference, as if fully set forth.

### Brief Description of the Drawings

Fig. 1 is a diagram illustrating the structure of a first embodiment of the portable terminal according to the present invention;
Fig. 2 is a diagram illustrating the structure of a second embodiment of the portable terminal according to the present invention;
Fig. 3 is a diagram illustrating a structure of the magnetic element and laminate film according to the present invention;
Fig. 4 is a diagram illustrating an alternative structure of the magnetic element and laminate film according to the present invention;
Fig. 5 is a diagram illustrating the structure of a third embodiment of the portable terminal according to the present invention;
Fig. 6 is a diagram illustrating the structure of a fourth embodiment of the portable terminal according to the present invention;
Fig. 7 is a diagram illustrating the structure of a fifth embodiment of the portable terminal according to the present invention;
Fig. 8 is a diagram illustrating the structure of a portable terminal used in the article identification method according to the sixth embodiment of the present invention;
Fig. 9 is a diagram illustrating the waveform of magnetic pulse detected by a detection coil in Example 1;
Fig. 10 is a diagram illustrating the voltage generated in a detection coil in Comparative Example 1;
Fig. 11 is a diagram illustrating the waveform of magnetic pulse detected by a detection coil in Example 3;
Fig. 12 is a diagram illustrating the voltage generated in a detection coil in Example 4;
Figs. 13(a) through 13(e) are diagrams illustrating the waveforms of magnetic pulses detected by a detection coil in Example 5;
Fig. 14 is a block diagram illustrating a measuring system for identifying an article to be detected according to the method of the present invention; and
Fig. 15 is a measured waveform illustrating the relationship between a detected signal and an excited signal in Example 1.

### Detailed Description of the Invention

The present invention will now be further described in connection with the accompanying drawings.

The addition of a magnetic element that generates and provides an inherent signal to a portable terminal can be accomplished by various methods. The most simple method involves attaching the magnetic element to the outer surface of the substrate of the portable terminal. However, for anti-forgery security reasons, the magnetic element is preferably incorporated inside the portable terminal. On the other hand, soft magnetic material is generally very sensitive to stress, and thus is subject to changes in properties. This is mainly attributed to magnetostriction that is inherent in soft magnetic materials. If the housing is large enough to have sufficient inner space, the portable terminal can be provided with an inner frame structure so that the application of stress to the magnetic element can be minimized or the assembly of the portable terminal can be carefully conducted.

A thin, small-sized portable terminal, such as an IC card, can be mass-produced by a method such as hot pressing. Also, a portable terminal is subject to rough handling during use. Stress is therefore unavoidably applied to a portable terminal, resulting in the magnetic element provided therein often losing its properties.

By way of example, the inventors prepared a card by hot-pressing two substrate sheets made of a polyethylene terephthalate resin with a polyester-based adhesive interposed therebetween. Using this procedure, amorphous wires showing Large Barkhausen reversal were interposed between the two substrate sheets so as to prepare a built-in magnetic element for security. However, most of the amorphous wires deteriorated and thus couldn't maintain their initial properties. In other words, the production of such a card was extremely difficult.

The portable terminal of the present invention overcomes the disadvantages of the previous terminals in that it is inexpensive, has high reliability, and its magnetic element is not subject to much deterioration when externally stressed. That is, the portable terminal of the present invention has an integrated circuit, a data transceiver and a magnetic element. The integrated circuit stores data and/or effects operations. The data transceiver transmits and receives data with external terminals. The magnetic element is held in the portable terminal in the form of a laminate with a film. When an external alternating magnetic field is applied to the magnetic element, the magnetic element undergoes abrupt magnetization reversal and outputs an inherent signal as a security signal.

The magnetic element of the present invention comprises a soft magnetic material that undergoes abrupt magnetization reversal when subjected to an externally applied alternating magnetic field. As such a soft magnetic material, there may be used a so-called Large Barkhausen reversal material, as disclosed in JP-B-3-27958 and JP-A-4-218905. ("JP-B" as used herein means an "examined Japanese patent publication," and "JP-A" means an "unexamined published Japanese patent application.")

The foregoing soft magnetic material is an amorphous or crystalline alloy based on Fe or Co, and is in the form of fine wires, thin ribbons or thin films. The soft magnetic material has a magnetic domain structure such that it undergoes extremely stable magnetization in specific positive and negative directions. When the intensity of an applied magnetic field reaches a certain critical value, the whole or a part of the material undergoes magnetization reversal at once. The degree of stabilization of the magnetic domain structure can be examined to see if the magnetization reversal should be strictly regarded as Large Barkhausen reversal. However, even if the magnetization reversal cannot be strictly regarded as Large Barkhausen reversal, any material can be used so far as it has magnetic properties similar to that of an Large Barkhausen reversal material and exhibits abrupt magnetization reversal.

The material of the magnetic element may also be an article monitoring marker, such as disclosed in JP-B-3-55873 and JP-B-3-58072. Such a material is made of a low magnetic stress soft magnetic material such as Co- or Ni-based amorphous alloy, Permalloy, Sendust and an alloy made of a ultra-fine crystal such as bcc-Fe and fcc-Co, and exhibits a low coercive force. This material shows a rapid change in magnetization in a very small magnetic field.

The diameter of such a magnetic element, if used in the form of fine wires, is preferably from 10 to 200 µm, more preferably from 20 to 100 µm, and most preferably from 25 to 50 µm. The thickness of such a magnetic element, if used in the form of thin ribbons, is preferably from 5 to 50 µm, and more preferably 15 to 30 µm. Further, the thickness of such a magnetic element, if used in the form of thin films, is preferably from 0.1 to 10 µm, and more preferably from 0.5 to 5 µm. The length of the magnetic element to be used herein may range from not less than 10 mm to not more than the length of the portable terminal.

The film to be laminated with the magnetic element may be, for example, polyethylene resin, polyethylene terephthalate resin, polyethylene naphthalate resin or vinyl chloride resin. The size of the film may range from not less than large enough to cover the entire magnetic element to not more than the size of the portable terminal. In case of using a plurality of magnetic elements, whole of the elements may be covered with a pair of films or each of the elements may be individually covered with a film. The thickness of the film may range from about 1 µm to about 100 µm. If the thickness of the portable terminal is predetermined, this should be taken into account when determining the thickness of the film. In general, the thickness of the film is preferably from 5 to 30 µm.

The lamination of the magnetic element may be accomplished by either of the following two methods. First, by a method of laminating two sheets of film each coated with an adhesive on one side thereof with the magnetic element interposed therebetween. Second, by a method of heating two sheets of film having the magnetic element interposed therebetween, so that the sheets are bonded to each other.

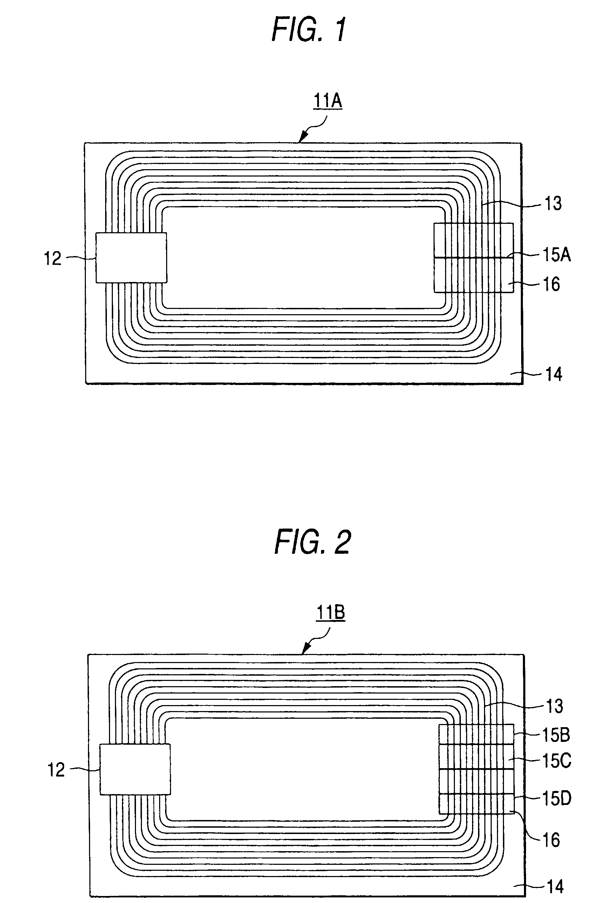

A first embodiment of the portable terminal according to the present invention is shown in Fig. 1. The portable terminal is an IC card llA that comprises a circuit element 12 made of an integrated circuit and an antenna element 13 for communications. The antenna element 13 is a spiral loop antenna having 10 turns. The circuit element 12 and the antenna element 13 are disposed on a supporting substrate 14. Interposed between the supporting substrate 14 and another supporting substrate (not shown) disposed thereunder, is a circuit required to operate the circuit element 12.

The portable terminal 11A also has a magnetic element 15A, which was previously laminated with a film 16, incorporated therein. The magnetic element 15A comprises a soft magnetic material that undergoes abrupt magnetization reversal when an alternating magnetic field is externally applied thereto. That is, when an alternating magnetic field having a predetermined magnitude is externally applied to the IC card 11A as an inquiry signal, the soft magnetic material contained in the magnetic element 15A undergoes abrupt magnetization reversal and externally emits a magnetic pulse as the intensity of the external magnetic field reaches a predetermined value. This magnetic pulse is detected as a security signal.

In Fig. 1, although the magnetic element 15A is disposed on the antenna element 13, the antenna element 13 may be disposed at any position on the portable terminal 11A. Also, the size of the film 16 may be any value as long as it is large enough to cover the entire magnetic element 15A.

A second embodiment of the portable terminal according to the present invention is shown in Fig. 2. The IC card 11B is similar to the IC card 11A of Fig. 1, except that three magnetic elements 15B, 15C and 15D are used in place of the single magnetic element 15A. Each of these magnetic elements 15B, 15C and 15D emits a magnetic pulse signal, but at different levels of intensity of an applied magnetic field. In other words, these magnetic elements 15B, 15C and 15D comprise soft magnetic materials that undergo magnetization reversal at different magnetic fields. The use of a plurality of magnetic elements 15B, 15C and 15D makes it possible to provide various portable terminals with identifying properties.

While the embodiment shown in Fig. 2 has three magnetic elements 15B, 15C and 15D, the number of magnetic elements is not specifically limited. Also, the attachment locations of the magnetic elements need not necessarily be the same as shown in Fig. 2.

The size of the film 16 to be laminated with the magnetic elements 15B to 15D may be large enough to cover all of the plurality of magnetic elements 15B to 15D simultaneously, or to cover these magnetic elements individually.

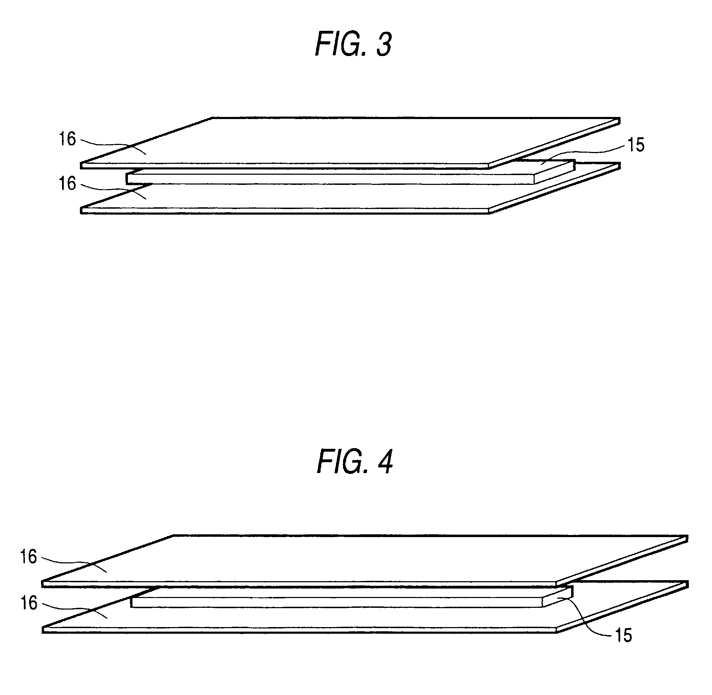

The shorter the length of a magnetic element that undergoes magnetization reversal at a high critical magnetic field, the more the magnetic properties of the magnetic element are subject to deterioration from stress. The lamination technique of the present invention is particularly effective in this situation, and particularly when the entire magnetic elements are covered by the film 16. In other words, if the end face of the film 16 is flush with the end face of the magnetic element 15 as shown in Fig. 3, and the length of the magnetic element 15 is extremely short, then the magnetic element 15 is negatively affected by even a very small stress. The lamination technique of the present invention may not be sufficiently effective in this arrangement. This tendency becomes extreme particularly with a magnetic element that undergoes magnetization reversal in a highly critical magnetic field. Otherwise, by laminating the entire magnetic element 15 contained in the film 16 as shown in Fig. 4, the effects of stress can be sufficiently avoided, making it possible to maintain good properties. The shortest distance between the end face of the film and the end face of the magnetic element is not specifically limited, but may not be less than 0.5 mm, and particularly not less than 2 mm, to maintain good results.

By laminating the magnetic element so that it is entirely contained within the film, good properties can be maintained even if the length of the magnetic element is short. Therefore, the lamination technique of the present invention is particularly suitable for small-sized magnetic elements.

Further, the portable terminal of the present invention having magnetic elements incorporated therein is particularly suitable for portable terminals.

The foregoing portable terminal is a small-sized portable terminal having an integrated circuit composed of a CPU and/or memory and an antenna incorporated therein, and corresponds to a so-called portable terminal, RF transponder, ID tag or the like. The IC properties and the memory capacity are determined based on the purposes of the IC and memory. For a highly-complicated system such as money dealing, an integrated circuit composed of a CPU having a high throughput and/or memory having a relatively large capacity are used. On the other hand, for relatively simple identification purposes, an integrated circuit composed of a simpler CPU and/or memory having a small capacity are used.

The antenna is selected based on the frequency at which transmission/reception of data is conducted. In general, the lower the frequency used, or the farther the point of data transmission/reception, preferably the greater the number of turns in the loop antenna. As described further below, the loop antenna to be used in the case where both data transmission/reception and security are provided should have many turns. The antenna may be in the form of a coil formed by winding a copper wire, by etching copper or aluminum, by printing a silver-based electrically-conductive coating or the like.

When an alternating magnetic field is externally applied to a portable terminal provided with the foregoing magnetic element, the soft magnetic material contained in the magnetic element undergoes abrupt magnetization reversal at a predetermined intensity of magnetic field and externally emits a magnetic field. Since the change in magnetization of a soft magnetic material is rapid, the magnetic field thus emitted is pulse-like. By detecting the magnetic pulse as a signal, security can be provided. If the generated magnetic pulse signal from these magnetic elements will be examined as a security signal for the purpose of preventing forgery, only one magnetic element need be used. On the other hand, if the kind or state of a portable terminal is to be identified, then a plurality of signals are required, and a plurality of the foregoing magnetic elements should be used.

The intensity of a magnetic field at which the soft magnetic material contained in the magnetic element undergoes abrupt magnetization reversal corresponds to abrupt Barkhausen reverse critical magnetic field for Fe-based amorphous fine wire disclosed in JP-B-3-27958, and almost corresponds to a coercive force for a thin Permalloy ribbon disclosed in JP-B-3-55873. Accordingly, if a plurality of magnetic elements comprising soft magnetic materials having different abrupt Barkhausen reverse critical magnetic fields or coercive forces are incorporated in a portable terminal, these magnetic elements each generate a magnetic pulse every time the external magnetic field reaches the respective abrupt Barkhausen reverse critical magnetic field or coercive force. This makes it possible to transmit data corresponding to the number or kind of magnetic elements incorporated therein.

The magnetic element may also be one which shows a change in magnetic properties when acted upon by a current, voltage, magnetic field or magnetic stress, or when cut.

The soft magnetic material contained in the magnetic element that undergoes abrupt magnetization reversal when subjected to an externally applied alternating magnetic field may be a fine Fe- or Co-based amorphous metal wire showing Large Barkhausen reversal properties, as mentioned above. Such a fine amorphous metal wire is known to exhibit a change in magnetic properties when heated. That is, when subjected to heat treatment, such a fine amorphous metal wire can loose or gain Large Barkhausen reversal properties. This effect becomes even greater when the metal wire is subjected to heat treatment while under the application of a magnetic field or stress. When the magnetic element is energized with electric current, it can not only be heated by Joule heat, but can also generate a magnetic field resulting from the electric current. Accordingly, the magnetic element may be heated in a magnetic field, allowing Large Barkhausen reversal properties to disappear.

As mentioned above, by laminating the magnetic material with a protective film, the application of unnecessary stress during production or use can be avoided. By applying or removing a predetermined stress, the magnetic properties of the magnetic material can be changed, making it possible to control data stored in the magnetic element. Stress can be applied by using an elastic material to hold the soft magnetic material, embossing the magnetic element, or arranging a resin or metal that undergoes thermal, electrical or optical deformation while in close contact with the soft magnetic material. The magnetic properties of the soft magnetic material also change when the material is cut, and therefore holes can be punched in the magnetic element to change its properties.

Further, the foregoing magnetic element may be made of a metallic soft magnetic material and arranged to form at least a portion of a capacitor electrode. When such a capacitor undergoes dielectric breakdown upon energization or irradiation with an electric wave, the properties of the soft metallic magnetic material momentarily exhibit change. More specifically, the soft magnetic material is metallic, and is used to form either a portion of or the entire electrode of a capacitor. Since this capacitor is arranged to have a low breakdown voltage, when the capacitor is directly energized with an electric current or irradiated with a strong electric wave, it undergoes dielectric breakdown that causes short-circuiting leading to destruction. When acted upon by an arc that is generated upon dielectric breakdown, the soft magnetic material, which also acts as the electrode of the capacitor, undergoes modification or physical destruction that causes a change in magnetic properties. The portable terminal thus treated generates a signal different from the initial signal, meaning that the data contained therein is changed. This change in data helps prevent an illegal alteration of a security signal, and the data cannot be restored once changed.

Alternatively, a hard magnetic material having a coercive force greater than the soft magnetic material constituting the magnetic element may be disposed in the vicinity of the magnetic element. The hard magnetic material can be magnetized so that the soft magnetic material is subjected to a bias magnetic field that causes the magnetic properties of the magnetic element to change. When the hard magnetic material is magnetized, the resulting residual magnetization results in a bias magnetic field being applied to the soft magnetic material in the magnetic element, thereby causing the magnetic properties of the soft magnetic material to change.

In order to change the magnetic properties of the magnetic element in a bias magnetic field, a plurality of magnetic bias elements containing a hard magnetic material may be disposed in the longitudinal direction of the soft magnetic material. A bias magnetic field from a number of magnetic poles may then be applied to these magnetic bias elements, such that a abrupt magnetization reversal of the soft magnetic material can be inhibited. Accordingly, the magnetic bias element having its constituent magnetic material magnetized prevents the magnetic element from generating a magnetic pulse.

If a hard magnetic material is disposed all over a soft magnetic material, or if magnetic bias elements are disposed on both the ends of the magnetic element comprising a soft magnetic material, a relatively uniform magnetic field is applied to the magnetic element. In such a case, the soft magnetic material constituting the magnetic element undergoes abrupt magnetization reversal, and its magnetic intensity is shifted by the bias magnetic field from the magnetic bias element. As a result, the timing of the magnetic pulse generation changes.

Alternatively, as disclosed in Japanese Patent Application No. 7-340291, a hard magnetic material may be disposed on both the ends of a soft magnetic material so that abrupt magnetization reversal can occur only when the hard magnetic material is magnetized. In such a case, the magnetization of the hard magnetic material causes a change in both the sharpness of the magnetic pulse signal and the timing of the magnetic pulse generation. Since the application of a magnetic field can cause the magnetic properties of a soft magnetic material to change, magnetization on a non-contact basis, and hence the rewriting of recorded data, may be effected.

The present invention also provides a method for reading security data from the foregoing portable terminal. An alternating magnetic field is externally applied to a portable terminal having an integrated circuit, an antenna and a magnetic element incorporated therein. This magnetic field application causes the magnetic element to undergo abrupt magnetization reversal and emit a magnetic pulse which is then detected and processed.

The alternating magnetic field that is externally applied to the foregoing portable terminal acts as an inquiry signal. The frequency of this inquiry signal may be properly determined according to the magnetic material used, and is normally from several Hz to hundreds of Hz. The frequency of data transmission/reception of the portable terminal may be used as it is. Alternatively, different frequencies may be superimposed on this frequency. In such a case, the zone of the frequency of data transmission/reception and the frequency of the inquiry signal of the magnetic element are separated from each other. When inquired, the magnetic element capable of undergoing abrupt magnetization reversal, generates a magnetic pulse that depends on the intensity of reversed magnetic field. The generated magnetic pulse is then detected by an antenna such as a loop antenna. The intensity, waveform, phase, frequency distribution, etc. of the voltage developed in the antenna are properly analyzed as a security signal. In the simplest case, only the occurrence of a magnetic pulse is examined. The antenna for detecting a magnetic pulse may be disposed in contact with or remote from the antenna for generating the inquiry magnetic field. If the phase relationship with the inquiry magnetic field is to be analyzed, these antennas are integrally disposed.

Alternatively, the magnetic pulse emitted by the magnetic element may be detected by the foregoing antenna provided in the portable terminal itself to cause the foregoing antenna to externally emit a corresponding security signal. The magnetic pulse generated by the magnetic element can be detected by a coil incorporated in the portable terminal. A very small magnetic element generates a magnetic pulse having a small intensity. The signal generated by such a small magnetic element can hardly be detected at a far distance. Such a signal can be detected by the portable terminal at the highest sensitivity.

As the foregoing detecting antenna, there may be used an antenna coil for data transmission/reception as in the case of portable terminal for data transmission/reception at frequencies on the order of megahertz or lower. Alternatively, an antenna coil dedicated for detection of magnetic pulses may be provided separately from the antenna for data transmission/reception. The magnetic pulse signal detected by the antenna provided in the portable terminal is then transmitted from the antenna for data transmission/reception to the external terminals. In this case, the magnetic pulse signal thus detected may be transmitted as it is. Alternatively, the magnetic pulse signal thus detected may be somewhat analyzed by the portable terminal, and then converted to a corresponding signal, which is then transmitted.

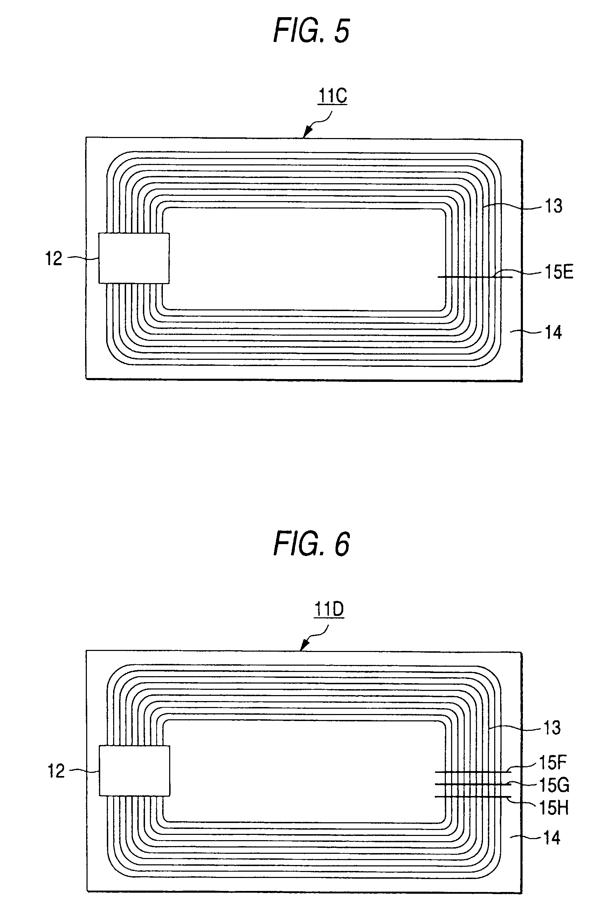

A third embodiment of the portable terminal according to the present invention is shown in Fig. 5. The portable terminal is an IC card 11C comprising a circuit element 12 made of an integrated circuit and an antenna element 13 for communications. The circuit element 12 and the antenna element 13 are disposed on a supporting substrate 14. A circuit required to operate the circuit element 12 is interposed between the supporting substrate 14 and another supporting substrate (not shown) disposed thereunder. The foregoing antenna element 13 is a spiral loop antenna having 10 turns.

The foregoing portable terminal 11C has a magnetic element 15E incorporated therein. The magnetic element 15E comprises a soft magnetic material that undergoes abrupt magnetization reversal when an alternating magnetic field is externally applied thereto. When an alternating magnetic field having a predetermined magnitude is externally input to the IC card 11C as an inquiry signal, the soft magnetic material contained in the magnetic element 15E undergoes abrupt magnetization reversal and externally emits a magnetic pulse when the intensity of the external magnetic field reaches a predetermined value. This magnetic pulse is detected as a security signal. In Fig. 5, the magnetic element 15E is disposed on the antenna element 13. However, the antenna element 13 may be disposed at any position on the portable terminal 11C.

A fourth embodiment of the portable terminal according to the present invention is shown in Fig. 6. The IC card 11D is similar to IC card 11C of Fig. 5, except that three magnetic elements 15F, 15G and 15H are used instead of the single magnetic element 15E. Each of these magnetic elements 15F, 15G and 15H emits a magnetic pulse signal at a different level of intensity of magnetic field. In other words, these magnetic elements 15F, 15G and 15H comprise soft magnetic materials that undergo magnetization reversal at different magnetic fields. Thus, the use of a plurality of magnetic elements 15F, 15G and 15H makes it possible to provide various portable terminals with identifying properties. While the embodiment shown in Fig. 6 has three magnetic elements 15F, 15G and 15H, the number of magnetic elements is not specifically limited thereto. Further, the location of attachment of the magnetic elements need not necessarily be the same as in Fig. 6.

The magnetic pulse signal generated by the magnetic element 15E or magnetic elements 15F, 15G and 15H is detected by the antenna element 13 disposed on the portable terminal 11D. Since the magnetic elements are preferably disposed as close to the antenna element 13 as possible, and preferably on the antenna element 13, the structures of Figs. 5 and 6 each illustrate portable terminals in which an antenna 13 on the IC card 11C, 11D is highly sensitive to security signals.

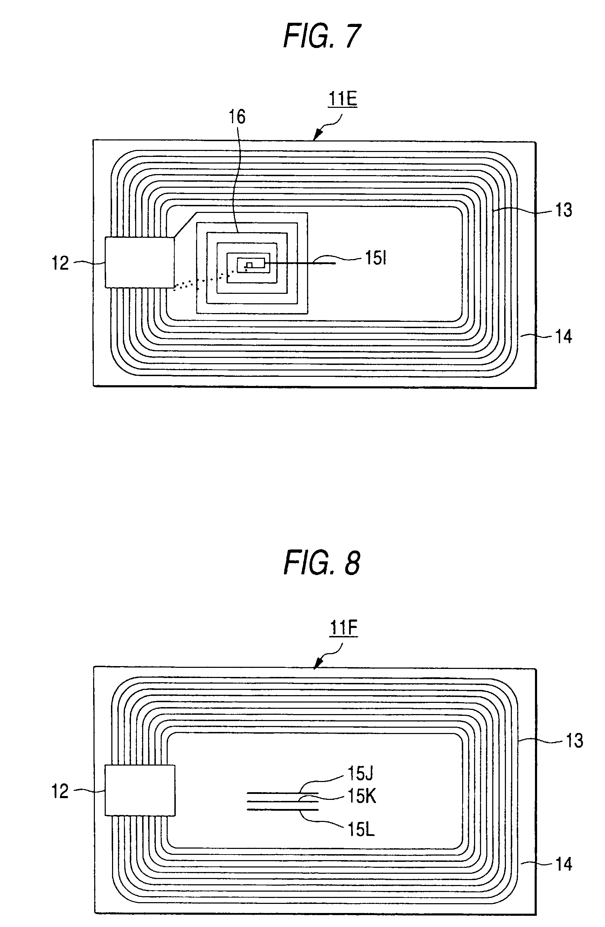

A fifth embodiment of the portable terminal according to the present invention is shown in Fig. 7. An IC card 11E comprises a second antenna element 16 disposed thereon, and a magnetic element 15I is provided on the antenna element 16. The second antenna element 16 is exclusively provided for the IC card 11E to detect the magnetic pulse signal generated by the magnetic element 15I. As a result, this embodiment of the portable terminal (i.e., IC card) is more sensitive than the embodiments of Figs. 5 and 6 in which the antenna 13 is used for both detection and communications.

The present invention is also more convenient for users. This additional convenience is accomplished by providing a detection method that minimizes the restriction on the structure of a detecting apparatus for reading a signal inherent to a magnetic element.

In the present invention, the intensity of a magnetic field at which the various magnetic elements incorporated in the IC card undergo magnetization reversal due to Barkhausen reversal or the like is measured to identify the IC card. Accordingly, the intensity of a magnetic field at a position where the magnetic elements are present needs to be monitored. This can be easily accomplished when the portable terminal as an object to be detected and the magnetic elements incorporated therein are located at predetermined positions. In other words, a sensor may be provided close to the IC card to be detected in such an arrangement that the intensity of the magnetic field thus developed is measured.

Alternatively, the intensity of the magnetic field may be calculated from data obtained by previously measuring the change in magnetic field over time. In order to excite the magnetic elements, a coil that can easily generate a spatially uniform magnetic field, such as a solenoid coil or a Helmholtz coil, may be used. Even if a system that can hardly generate a uniform magnetic field, such as a flat coil, is used, the measurement of the magnetic field applied to the IC card 11E to be detected is not so difficult as long as the position of the IC card is accurately determined.

However, regardless of which coil is used, the detector that requires the IC card 11E to be detected to be set at a predetermined position as mentioned above places considerable restrictions on the users' convenience. This problem may not be so serious with magnetic cards or contact IC cards because these cards usually require the users to insert the IC card to be detected into a slot of the reader so that data recorded thereon may be read. On the contrary, portable terminals, etc. are considered mainly advantageous in that the data of IC card itself is detected at a far distance. Therefore, if the IC card position required to read data of the magnetic element is fixed, the convenience of the IC card 11E is drastically impaired. In other words, a reader having a structure such that the card is inserted into a slot is not desirable. The structure of the reader is preferably such that data can be read at an arbitrary position without any restrictions within a specified spatial zone.

Taking the foregoing conditions into account, a solenoid coil and a Helmholtz coil are not so desirable because their structure normally requires that the IC card to be detected be fixed within a closed space during excitation. On the contrary, a flat coil generates a magnetic field in an open space present thereabove (or therebelow). Therefore, the position of the IC card 11E can be predetermined relatively freely. However, as the distance between the coil and the IC card 11E to be detected increases, the intensity of the magnetic field rapidly decays. Therefore, the measurement of the magnetic field to which the IC card 11E to be detected is exposed is extremely difficult.

The method of the present invention for identifying an IC card to be detected solves the foregoing problem. The method first involves applying an alternating magnetic field to an IC card to be detected. The IC card has a plurality of elements which are disposed at arbitrary positions and undergo abrupt magnetization reversal at different intensities of magnetic field so as to generate inherent signals when subjected to an externally applied periodic alternating magnetic field. The alternating magnetic field causes each of the elements to output a signal, the timing of which is then examined together with the exciting waveform of the alternating magnetic field to determine the intensity of magnetic field at which the elements undergo magnetization reversal. This determined intensity is then used to determine the kind of the elements to thereby identify the IC card. A specific element which undergoes magnetization reversal at a known intensity of magnetic field is provided on the IC card to be detected as a reference element. The signal timing from the reference element and the exciting waveform of the alternating magnetic field are used to calculate the intensity of the applied magnetic field at which the other magnetic elements undergo magnetization reversal.

The method of the present invention is particularly suitable for the detection of an inherent signal from portable terminals (i.e., IC cards) as mentioned above. However, the method of the present invention can also be effectively used for remote identification of other portable terminals.

When the IC card (i.e., portable terminal, or portable terminal) provided with magnetic elements is subjected to the application of an alternating magnetic field to excite the various magnetic elements, the various magnetic elements undergo magnetization reversal at respective intensities of magnetic field to externally emit a magnetic field. The signal detection is initiated while a magnetic field is being applied to the IC card to be detected. The resulting change in magnetization in the magnetic elements causes the generation of an inherent signal as a magnetic pulse signal, which is then detected.

The timing of the foregoing magnetic pulse signal is then compared with the timing of the exciting waveform. This data is then analyzed to determine the magnetic field intensities at which the various magnetic elements undergo magnetization reversal. The signal from the reference element, which is obligated to be inserted into each of the IC cards, is first extracted. Then, using the timing of this signal as a reference, the intensity of the magnetic field applied to the IC card is measured. The measurement of the intensity of the magnetic field can be accomplished by the following method, but the present invention is not limited thereto.

Assuming that a magnetic element having a magnetization reversal intensity of 1 Oe is selected as a reference element. If the signal from this reference element can be discriminated from the signals generated by other elements, the IC card to be detected is subjected to the application of a magnetic field having 1 Oe the moment the signal from the reference element is detected. This absolute means that the measurement of an absolute value is made possible. The relative comparison of data from the reference element with that from the other magnetic elements makes it possible to calculate, as an absolute value, the intensities of the magnetic field in which the other magnetic elements generate signals.

There are various relative comparison methods for calculating the intensity of the magnetic field. For example, the relationship between the excited output (e.g., electric current flowing through the coil) and the intensity of the magnetic field around the IC card to be detected can be determined to measure the intensity of the magnetic field. If the exciting waveform is a regular waveform such as sine wave or triangular wave, the intensity of the magnetic field can be calculated from the interval of time between the time of zero crossings of exciting intensity and the time at which the reference signal is detected. If two or more reference elements are used in a pair, the intensity of magnetic field around the IC card to be detected can be calculated from the timing of signal generation from the various elements and the interval of time between the generation of these signals even if the output of the exciting side is not monitored.

Thus, by disposing a reference element for giving a reference signal on the IC card to be detected and measuring the signal from the reference element, the intensity of the magnetic field around the IC card can be determined. Even if the IC card is disposed in an arbitrary space in the measurement system, the intensity of the magnetic field at which various magnetic elements undergo magnetization reversal can be accurately measured. The combination of these measurements can be compared with each other to identify the IC card.

The identification method, which is the sixth embodiment of the present invention, identifies a portable terminal 11F like the one shown in Fig. 8. The portable terminal 11F illustrated in Fig. 8 is similar to those illustrated in Figs. 1, 2 and 5-7, except for the location of the magnetic elements 15J, 15K and 15L.

The magnetic elements 15J, 15K and 15L comprise soft magnetic materials that undergo abrupt magnetization reversal at different intensities of magnetic field when they are subjected to an externally applied alternating magnetic field. Thus, when an alternating magnetic field having a predetermined magnitude is externally input to the IC card 11F as an inquiry signal, the soft magnetic materials contained in the magnetic elements 15J, 15K and 15L undergo abrupt magnetization reversal. The soft magnetic materials then externally emit magnetic pulses as the intensity of the external magnetic field reaches the respective predetermined values, and these magnetic pulses are detected as an identification signal.

Among the foregoing three magnetic elements 15J, 15K and 15L, the magnetic element 15J is a reference element for providing a reference signal. This reference element is provided on all of the portable terminals 11F to be detected. Accordingly, when a magnetic field having the intensity at which the magnetic element 15J undergoes magnetization reversal is applied, each of the portable terminals 11F to be detected generates a magnetic pulse signal. The reference signal from the magnetic element 15J needs to be definitely distinguished from the signals generated by the other magnetic elements 15K and 15L.

The most easily practiced method involves using a reference element as a magnetic element that undergoes magnetization reversal at the smallest intensity of magnetic field. More specifically, the pulse signal that is first detected following the intensity of alternating magnetic field reaching zero is regarded as a reference signal. By determining the intensity of the magnetic field at which the subsequently detected pulse signal is generated according to the relationship based on this reference signal, the necessity of a complicated operation such as frequency analysis is eliminated. Thus, the measuring instrument can be configured very simply. In Fig. 8, the magnetic elements 15J, 15K and 15L are each disposed on the central part of the IC card. However, these magnetic elements may be disposed on any parts of the IC card 11F to be detected.

### Examples:

The present invention will now be further explained by way of the following examples and comparative example.

The portable terminal according to the present invention comprises a magnetic element having a security function incorporated therein, and may be in the form of a card, chip, or the like.

There are many possible methods for producing the portable terminal of the present invention. Embodiments of the portable terminal comprising a magnetic element incorporated in a plastic substrate will be described below. However, the present invention is not limited to the below-described examples. The examples are provided merely to promote a better understanding of the present invention.

### Example 1:

Two sheets of polyethylene terephthalate (PET) films having a length of 85 mm, a width of 55 mm and a thickness of 25 µm and coated with an adhesive layer having a thickness of 20 µm on one side thereof were provided. The sheets were laminated with a fine amorphous metal wire of Co₃₉Fe₃₉Si₇B₁₅ (atom-%) having a diameter of 30 µm and a length of 15 mm interposed between the sheets. The laminate was then sandwiched by two sheets of PET resin layers having the same size as the PET films and a thickness of about 450 µm. The laminate was then hot-pressed at a temperature of 135°C and a pressure of 20 kg/cm² for about 30 minutes to obtain a card-like sample.

The obtained sample was then inserted into the central part of an exciting coil having a length of 300 mm and 560 turns and a detection coil having a length of 150 mm and 567 turns. An alternating current was supplied to the exciting coil from a Type HP-3324A synthesized function sweep generator produced by Hewlett-Packard, Inc. to generate a triangular wave magnetic field having 60 Hz and 4 Oe. A Type HP-54110 digitizing oscilloscope produced by Hewlett-Packard, Inc. was connected to the detection coil to measure the waveform of the voltage induced in the detection coil by the magnetization reversal of the sample.

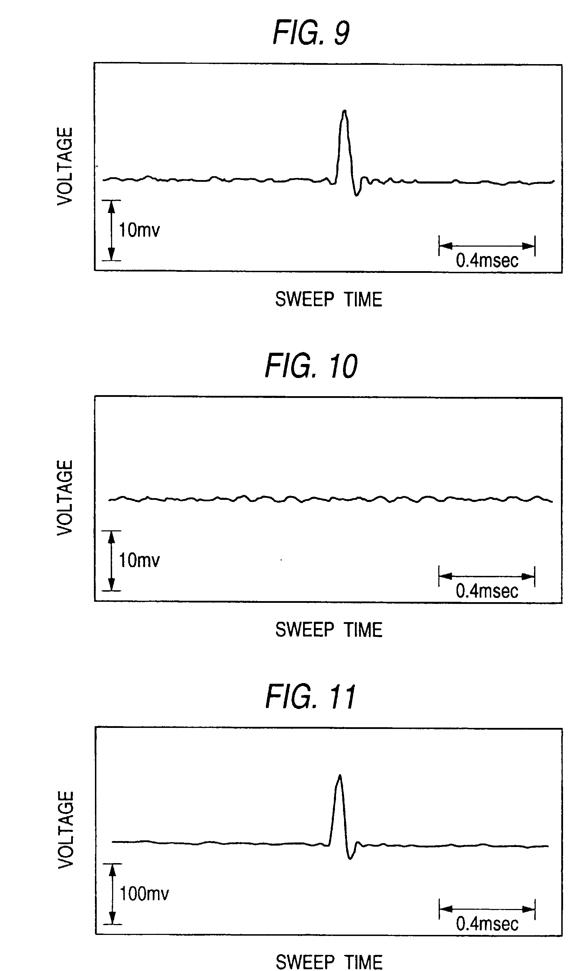

Fig. 9 illustrates the waveform of the voltage pulse generated in the detection coil. The fine amorphous metal wire underwent an extremely abrupt magnetization reversal, and thus a sharp pulse waveform having a small half-width was observed. By determining whether this waveform is present, a security function for verifying the validity of a card was obtained. The identification of a magnetic pulse signal was accomplished by the comparison of waveforms as well as the analysis of frequency distribution, measurement of specific harmonic components, etc.

### Comparative Example 1:

A card-like sample of a portable terminal comprising a magnetic element incorporated therein was prepared in the same manner as in Example 1, except that the magnetic element was not laminated. When a magnetic field was applied to the magnetic element incorporated in the card, the waveform of the voltage pulse as shown in Fig. 9 was not observed, as shown in Fig. 10. Thus, the card did not have a security function, and this was attributed to the deterioration of the soft magnetic material due to the effect of stress.

### Example 2:

Two sheets of polyethylene terephthalate (PET) films having a length of 15 mm, a width of 10 mm and a thickness of 25 µm and coated with an adhesive layer having a thickness of 20 µm on one side thereof were provided. The two sheets were laminated with three fine amorphous metal wires of Co₃₉Si₇B₁₅ (atom-%) having a diameter of 30 µm and a length of 15 mm interposed therebetween. The wires were disposed parallel to each other at intervals of 5 mm. The laminate was then sandwiched by two sheets of PET resin films having a length of 85 mm, a width of 55 mm and a thickness of about 450 µm. The laminate was then hot-pressed at a temperature of 135°C and a pressure of 20 kg/cm² for about 30 minutes to obtain a card-like sample. The end face of these fine wires was almost flush with that of the laminate film.

A card-like sample was prepared in the same manner as mentioned in the previous paragraph, except that two sheets of polyethylene terephthalate (PET) films having a length of 25 mm, a width of 10 mm and a thickness of 25 µm coated with an adhesive layer having a thickness of 20 µm on one side thereof were used. The end faces of the various fine wires were 5 mm inside from that of the film, and thus these fine wires were completely contained in the film.

The two card-like samples thus prepared were then measured for magnetic properties in the same manner as in Example 1.

Table 1 shows the critical magnetic field for magnetization reversal measured with the three wires left unprocessed and the intensity of pulse voltage thus measured.

**Table 1**

| Critical Magnetic Field (Oe) | Pulse Voltage (mV) |
|---|---|
| 0.7 | 15.2 |
| 1.8 | 17.2 |
| 3.6 | 10.4 |

Table 2 shows the change in magnetic properties of the card-like sample having a structure such that the end face of the fine wires were flush with that of the film. The comparison of the properties measured at the intensity of pulse voltage observed from before to after processing shows that samples which undergo magnetization reversal at a small critical magnetic field don't show a drastic change, while those which undergo magnetization reversal at a great critical magnetic field do show a drastic change.

**Table 2**

| Critical Magnetic Field (Oe) | Pulse Voltage (mV) | % Residue After Processing |
|---|---|---|
| 0.7 | 12.2 | 80.3 |
| 1.8 | 12.0 | 69.8 |
| 3.6 | 5.0 | 48.1 |

On the other hand, Table 3 shows the change in magnetic properties of the sample having films laminated with each other with fine wires contained therein. The sample showed a small change in properties even after pressing regardless of the magnitude of critical magnetic field.

**Table 3**

| Critical Magnetic Field (Oe) | Pulse Voltage (mV) | % Residue After Processing |
|---|---|---|
| 0.7 | 14.4 | 94.7 |
| 1.8 | 15.4 | 89.5 |
| 3.6 | 9.0 | 86.5 |

The sample having films laminated with each other with fine wires having a length of 25 mm interposed between the films such that the end face of the fine wires are flush with that of the films showed no deterioration of properties after the processing of these fine wires.

The sample obtained by hot-pressing fine wires sandwiched by PET resin sheets free from lamination with films showed deterioration of all the fine wires as in Comparative Example 1. Thus, no voltage pulses were observed.

Thus, the effectiveness of processing the magnetic element laminated with the films was confirmed. This processing is effective particularly when the entire magnetic element is laminated contained in the film.

### Example 3:

Two sheets of PET films having a thickness of 25 µm coated with an adhesive were laminated with each other with a fine amorphous wire of Co₃₉Fe₃₉Si₇B₁₅ (atom-%) having a diameter of 30 µm and a length of 50 mm interposed therebetween. The laminate was then sandwiched by two sheets of PET films having a thickness of 100 µm. The laminate was then hot-pressed to obtain a card-like sample. The obtained sample was then inserted into the central part of an exciting coil having a length of 300 mm and 560 turns, and a detection coil (with a compensation coil) having a length of 100 mm and 640 turns. An alternating current was supplied to the exciting coil from a Type HP-3324A synthesized function sweep generator produced by Hewlett-Packard, Inc. to generate a sine wave magnetic field having 60 Hz and 1 Oe. A Type HP-54110 digitizing oscilloscope produced by Hewlett-Packard, Inc. was connected to the detection coil to measure the waveform of the voltage induced in the detection coil by the magnetization reversal of the sample.

Fig. 11 illustrates the waveform of the voltage pulse generated in the detection coil. The fine amorphous metal wire underwent an extremely abrupt magnetization reversal, and thus a sharp pulse waveform having a small half-width was observed. By determining whether this waveform is present, a security function for verifying the validity of the card may be obtained. The identification of the magnetic pulse signal was accomplished by the comparison of waveforms as well as the analysis of frequency distribution, measurement of specific harmonic components, etc.

### Example 4:

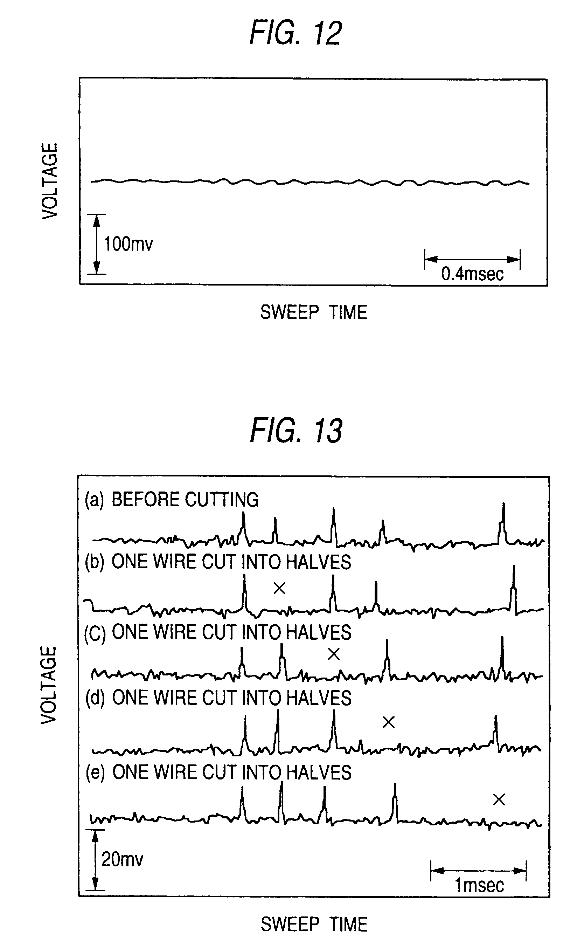

A card-like sample was prepared in the same manner as in Example 1, except that three sections (Arnochrome, produced by Arnold, Inc.) made of a semihard magnetic material having a greater coercive force than the foregoing fine metal wire were provided on each of the fine metal wires in addition to the structure of Example 1. A direct magnetic field having about 100 Oe was then applied to the sample so as to magnetize these magnetic sections. The obtained sample was then measured for properties in the same manner as in Example 1. Fig. 12 shows the waveform of the voltage generated in the detection coil. The comparison of the waveform of Fig. 12 with that of Fig. 11 clearly shows that the waveform has been changed and magnetic pulse signals have no longer been generated. Thus, by applying a magnetic field to a soft magnetic material made of a fine amorphous metal wire from a semihard magnetic section, it was possible to control the magnetic pulse signals.

### Example 5:

The heat treatment conditions of a fine amorphous metal wire of Co₃₉Fe₃₉Si₇B₁₅ (atom-%) were changed to prepare five fine wires that underwent magnetization reversal at different magnetic fields. The magnetic field at which these fine wires underwent magnetization reversal was 0.7, 1.1, 1.7, 2.2 and 3.4 Oe, respectively, in increasing order. These fine wires were each cut to a length of 15 mm, and arranged in parallel to prepare a card-like sample. The prepared card-like sample was then inserted into the central part of an exciting coil having a length of 300 mm and 560 turns and a detection coil (with a compensation coil) having a length of 15 mm and 527 turns in such an arrangement that the longitudinal direction of the coils coincides with that of the fine wires. A triangular wave magnetic field having 60 Hz and 4 Oe was generated in the exciting coil in the same manner as in Example 1. The waveform of the voltage induced in the detection coil by the resulting magnetization reversal of the sample was then measured.

Fig. 13(a) illustrates the voltage waveform of this sample. The various voltage pulses and the fine wires which generate them could be collated with each other according to the time at which the signal of the exciting magnetic field (60 Hz) was clocked. Figs. 13(b) to 13(e) show the voltages waveform developed in the sample having the respective ones of the fine wires cut into halves. These curves show that the sample having the respective ones of the fine wires cut into halves emits no signal at the position marked by the symbol X. In other words, by monitoring the voltage waveform, it was possible to identify which of the fine wires had been processed.

It was thus made obvious that the use of a proper combination of a plurality of different fine wires makes it possible to handle a plurality of different signals. Further, when used in combination with a method involving the variation of signals, this method makes it possible to use more signals.

As shown in Figs. 13(b) to 13(e), when the wire is equally cut into two, a pluse is not appeared. In order to generate the characteristic of Large Barkhausen reversal, the minimum necessary length (in this case, about 10mm) exists. Accordingly, if the wire having the length of 15mm is equall cut into two, the cut wire is shorter than the critial length, thereby eliminating the characteristic. Thus, the characteristic of Large Barkhausen reversal is sensitively influenced by the shape and length of the wire. Therefore, in this Example, five wires having different magnetization reversal were used and each of five wires was cut respectively, the pulse at a different portion is eliminated.

### Example 6:

Three fine amorphous metal wires were prepared on an IC card to be detected as magnetic elements to generate an identification signal. The fine amorphous metal wires of Co₃₉Fe₃₉Si₇B₁₅ (atom-%) each had a diameter of 30 µm and a length of 15 mm. These fine metal wires had been subjected to heat treatment at different temperatures and generated Large Barkhausen reversal at different intensities of magnetic field.

The intensity of magnetic field at which these fine wires underwent Large Barkhausen reversal was measured in the following manner. The fine wires were each inserted into the central part of a measuring instrument having a solenoid detection coil with a length of 150 mm and 567 turns disposed in the central part of a solenoid exciting coil with a length of 300 nm and 560 turns.

An alternating current was supplied to the exciting coil from a Type HP-3324A synthesized function sweep generator produced by Hewlett-Packard, Inc. to generate a triangular wave magnetic field having 60 Hz and 4 Oe. A Type HP-54110 digitizing oscilloscope produced by Hewlett-Packard, Inc. was connected to the detection coil to measure the waveform of the voltage induced in the detection coil by the magnetization reversal of the sample. The results show that the foregoing three fine amorphous metal wires underwent Large Barkhausen reversal at magnetic field intensities of 0.6, 1.4 and 2.5 Oe, respectively. Among these fine wires, the fine wire that underwent Large Barkhausen reversal at the smallest magnetic field intensity (i.e., 0.6 Oe) was regarded as a reference element.

Subsequently, two sheets of polyethylene terephthalate (PET) films having a length of 85 mm, a width of 55 mm and a thickness of 25 µm coated with an adhesive layer having a thickness of 20 µm on one side thereof were laminated with each other. The foregoing three fine amorphous metal wires were interposed between the two sheets and were arranged parallel to each other at intervals of 5 mm. The obtained laminate was then sandwiched by two sheets of PET resin films having the same size as the foregoing PET film and a thickness of about 450 µm. The laminate was then hot-pressed at a temperature of 135°C and a pressure of 20 kg/cm² for about 30 minutes to obtain a card-like sample.

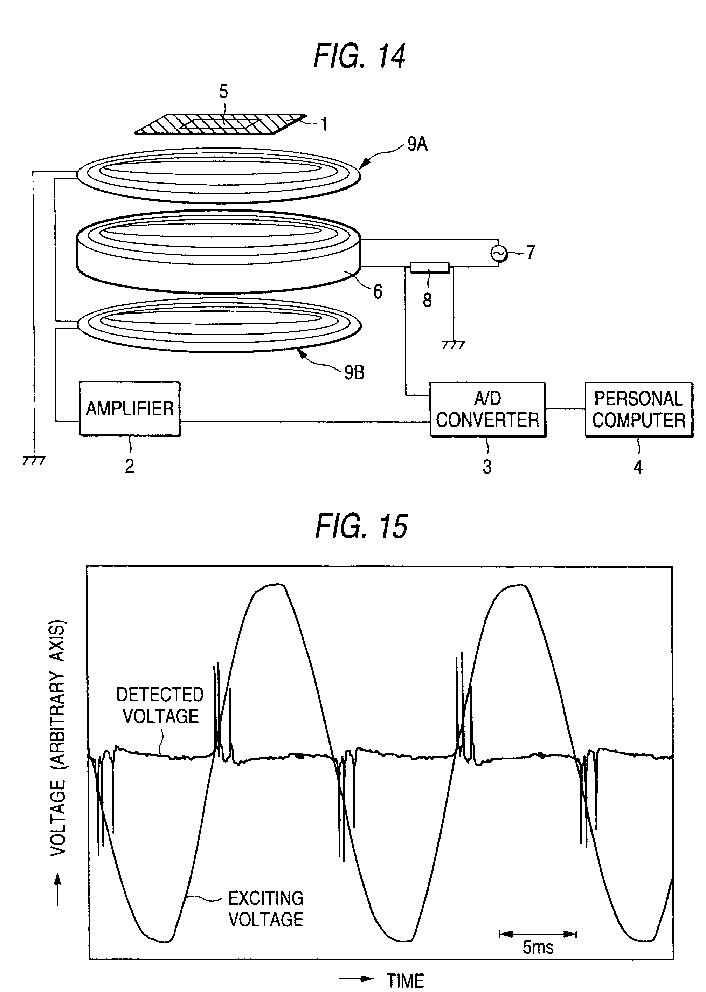

The obtained sample was then subjected to identification test by means of a reader device composed of flat coils, as shown in Fig. 14. More specifically, a spiral flat coil 6 having 190 turns was energized with a sine wave current from an alternating power supply 7 thereby providing an exciting coil 6. Spiral flat coils 9A and 9B each having 130 turns were provided on and in close contact with the upper and lower sides of the exciting coil 6. The coils 9A and 9B were connected in series with each other. In accordance with this arrangement, the exciting waveform was canceled.

The foregoing card 1 comprising the magnetic elements 5A, 5B and 5C incorporated therein was provided in the space above the formed excitation-detection system. When the sample card 1 was excited by the exciting coil 6, the magnetic elements 5A, 5B and 5C incorporated in the card 1 generated identification signals which were then detected by the detection coils 9A and 9B. The detected signals were amplified by an amplifier 2, and then input to a channel 1 in an A/D converter 3. The voltage developed across a resistor 8 connected in series with the exciting coil 6 was input as waveform data of an electric current flowing through the exciting coil 6 to a channel 2 in the A/D converter 3. The detected signal and the exciting signal thus obtained were then input to a personal computer 4 through the A/D converter 3 for analysis.

The detected signal and exciting signal are shown in Fig. 15. Three positive and negative pulse voltages were induced in the detection coils 9A and 9B for one cycle of excitation by the magnetic pulse signals generated when the magnetic elements underwent Large Barkhausen reversal. Among these pulse voltages, the pulse signal generated the earliest following a zero crossing of exciting voltage was detected as a reference signal.

Since the reference element underwent magnetization reversal at a magnetic field intensity of 0.6 Oe, it was confirmed that the intensity of the magnetic field applied around the card sample 1 at this moment is 0.6 Oe. Since the waveform of the exciting voltage was a sine wave, the maximum applicable magnetic field intensity was calculated from the time between the zero crossing point of the exciting voltage and the time at which the reference signal is determined and the exciting period. Further, the times at which the other magnetic elements generate signals were used to calculate the intensities at which they underwent magnetization reversal. Thus, the intensity at which the other two magnetic elements underwent magnetization reversal were determined to be 1.45 and 2.55 Oe, respectively. As a result, the kind of magnetic elements incorporated in the card were identified to a practically applicable precision.

As mentioned above, even in such an arrangement that the card sample 1 is disposed in any space above the excitation-detection system formed by flat coils, the intensity of the magnetic field at which the magnetic elements incorporated in the card sample 1 undergoes magnetization reversal can be accurately measured, making it possible to identify the card sample.

While only certain embodiments of the invention have been specifically described herein, it will apparent that numerous modifications may be made thereto without departing from the spirit and scope of the invention.

## Claims

1. A portable terminal, comprising:
an integrated circuit for storing data and/or effecting operations;
an antenna for transmitting and receiving data respectively to and from external terminals; and
a magnetic element for undergoing abrupt magnetization reversal in response to an application of an external alternating magnetic field, and outputting an inherent signal as a security signal.

2. The portable terminal according to Claim 1, wherein said magnetic element is laminated with a film.

3. The portable terminal according to Claim 2, wherein said magnetic element is entirely enclosed by the film.

4. The portable terminal according to Claim 1 or 2, wherein said portable terminal is a portable terminal.

5. The portable terminal according to Claim 4, wherein magnetic properties of said magnetic element change when said magnetic element is subjected to an application of any of a current, voltage, magnetic field and stress, or when cut.

6. The portable terminal according to Claim 5, wherein said magnetic element is comprised of a soft metallic magnetic material which constitutes a part of an electrode of a capacitor that undergoes dielectric breakdown with the change in the properties of the soft metallic magnetic material upon energization or irradiation with an electric wave.

7. The portable terminal according to Claim 5, wherein a magnetic element containing a hard magnetic material having a coercive force greater than that of the soft magnetic material is disposed close to the magnetic element so that when the magnetic element is magnetized, a magnetic field is applied to the soft magnetic material to cause the change in the magnetic properties thereof.

8. A security method for portable terminals comprising the steps of:
externally applying an alternating magnetic field to a wireless communication terminal having an integrated circuit, an antenna and a magnetic element incorporated therein as defined in Claim 4, to cause the magnetic element to undergo an abrupt magnetization reversal and hence emit a magnetic security pulse;
detecting the magnetic security pulse; and
processing the detected magnetic security pulse.

9. The security method according to Claim 8, further comprising the step of externally emitting a corresponding security signal from the antenna provided in the portable terminal, while simultaneously using the antenna to detect the magnetic security pulse emitted by the magnetic element.

10. A portable terminal, comprising:
an integrated circuit provided on a substrate;
an antenna provided on the substrate; and
a magnetic element, provided on the substrate, for undergoing abrupt magnetization reversal in response to an application of an external alternating magnetic field, and outputting an inherent signal as a security signal.

11. A method for identifying an article, comprising the steps of:
applying an alternating magnetic field to an article having a plurality of elements each of which, when subjected to the alternating magnetic field, undergoes abrupt magnetization reversal at a respective magnetic intensity and generates a respective inherent signal;
detecting the magnetic intensity of magnetization reversal of each of the elements according to the respective inherent signal generation time and the exciting waveform of the alternating magnetic field; and
identifying a kind of each of the elements using the magnetic intensity of magnetization reversal to thereby identify the article;
wherein one of the elements has a known magnetic intensity of magnetization reversal and is disposed on the article as a reference element, so that each of the intensities of magnetic field applied to the article can be calculated according to the time during which this signal is generated and the exciting waveform of the alternating magnetic field of the reference element, and the magnetic intensity of magnetization reversal of the other elements are detected according to the results of the reference element.
